(19) Europäisches Patentamt
European Patent Office
Office européen des brevets

(11) **EP 1 502 963 A1**

(12) **EUROPEAN PATENT APPLICATION**

(43) Date of publication:
**02.02.2005 Bulletin 2005/05**

(51) Int Cl.[7]: **C22B 3/20**, C22B 15/00,
C02F 1/461, C02F 1/62,
C02F 1/78, C25C 1/12,
C02F 9/00

(21) Application number: **04254464.3**

(22) Date of filing: **27.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Goosey, Martin T.**<br>**Galley Common, Nuneaton CV10 9NZ (GB)**<br>• **Bains, Narinder Singh**<br>**Wednesfield, Wolverhampton WV11 3AG (GB)** |
| (30) Priority: **01.08.2003 GB 0318017** | (74) Representative: **Kent, Venetia Katherine**<br>**Rohm and Haas (UK) Ltd**<br>**European Patent Department**<br>**28th. Floor, City Point**<br>**One Ropemaker Street**<br>**London EC2Y 9HS (GB)** |
| (71) Applicant: **Rohm and Haas Electronic Materials, L.L.C.**<br>**Marlborough, Massachusetts 01752 (US)** | |

(54) **Recovery of metals from azole containing waste fluid by ozonization and electrolysis**

(57) Metals and metal alloys are recovered from waste fluids, which contain metal ions and heterocyclic nitrogen compounds. Such waste fluids are exposed to short wavelength UV irradiation and ozone to oxidize the heterocyclic nitrogen compounds and the metals or metal alloys are recovered electrolytically. The method is advantageously applied for copper recovery from spent solutions containing azole compounds used in etching copper layers of multilayer circuit boards.

EP 1 502 963 A1

**Description**

Background of the Invention

The present invention is directed to a method of recovering metals from waste fluids containing metal ions and heterocyclic nitrogen compounds. More specifically, the present invention is directed to a method of recovering metals from waste fluids containing metal ions and heterocyclic nitrogen compounds by oxidizing the heterocyclic nitrogen compounds and recovering the metal ions as reduced base metal.

Fluids containing metal ions and heterocyclic nitrogen compounds are employed at various stages in the manufacture of multilayer printed circuit boards. Such fluids may be entirely aqueous or may be mixtures of organic solvents and water. Multilayer printed circuit boards are used for a variety of electrical applications. Multilayer circuit boards are composed of two or more circuit layers. Each circuit layer is separated from another by one or more layers of dielectric material. The Circuit layer is formed by applying a metal layer onto a polymeric substrate. Typically the metal is copper. Printed layers are then formed onto the metal layers by various methods known in the art, for example print and etch to define and produce the circuit traces, i.e. discrete circuit lines in a desired circuit pattern. Once the circuit patterns are formed, a stack is formed comprising multiple circuit layers separated from each other by a dielectric layer such as glass fiber reinforced epoxy. Thereafter, the stack is subjected to heart and pressure to form the laminated multilayer circuit board.

Following lamination, the multiple circuit layers are electrically connected to each other by drilling through-holes through the board surface. Resin smears or accretions from through-hole drilling are removed under stringent conditions, for example, by treatment with a concentrated sulfuric acid or hot alkaline permanganate solution. Thereafter, the through-holes are further processed and plated to provide a conductive interconnecting surface.

Prior to lamination and through-hole formation, the discrete metal circuit lines are treated with an adhesion promoter to improve bond strength between each circuit layer and adjacent interleaving dielectric resin layers. One method used in the art to improve bond strength involves oxidative treatment of copper circuit lines to form a copper oxide surface coating on the circuit lines. The oxide coating is a black or brown oxide layer that adheres to the copper. The oxide possesses significantly more texture or roughness than an untreated copper surface. Chemical treatments, which produce adherent conversion coatings on metal surfaces, such as black oxide, are used to promote adhesion of organic materials to metals. Other examples include metal phosphate coatings used as paint adhesion promoters. Such roughened and conversion coated surfaces enhance adhesion and wettability to the adjacent insulating layer by a mechanism that is believed to include mechanical interlocking between the metal surface and a dielectric resin layer.

Other techniques known in the art to promote adhesion between copper surfaces and dielectric resins include the use of etches inclusive of cupric chloride etchants, mechanical treatments designed to produce surface texture and metal plating.

Compositions useful for the treatment of copper and its alloys to form an etched surface for lamination of circuit layers in multilayer fabrication are aqueous acidic solutions, which include heterocyclic nitrogen compounds such as triazole compounds together with peroxide. While such etchant solutions are highly effective, the compositions also yield a waste solution that contains metal ions. Such spent etchant solutions are undesirable from a waste treatment and cost perspective. For example, copper waste solutions have been disposed of by off-site contractors or generate large quantities of sludge. In either approach, the spent solutions and their contained metals are eventually consigned to landfill. This results in loss of metals, which if recovered, could be reused to reduce cost in the manufacture of multilayer printed circuit boards and to provide for a more efficient process. Additionally, metals deposited in landfills present an environmental hazard. Metals from spent solutions are toxic to many forms of life. For example, copper is highly toxic to many forms of marine life. Overtime such metals may be washed from the landfills into the marine environment presenting a serious hazard to aquatic life.

Recovery of metals from such solutions has been difficult in the past because azole compounds, which are often included in such compositions, readily chelate and form complexes with metal ions such as copper ions. When the metal ions are in complexes, they are difficult to recover from waste effluent. Attempts have been made to try and destroy the azole compounds using strong oxidants such as permanganate. However, the use of permanganate had no significant effect and metals still were unable to be recovered.

U.S. 6,391,188 to Bains and Goosey discloses a method for recovering copper metal from waste fluids originating from etchants. The method employs an electrolytic cell with a cathode and anode separated by an ion-permeable membrane to provide a treated solution free of copper. While the method effectively recovers copper from copper and azole complexes of waste effluents having copper concentrations of 20 g/L to 25 g/L, many waste effluents have metal concentrations of 40 g/L or more. Such high metal concentration effluents also have higher concentrations of azole compounds and more copper and azole complexes. The methods described in U.S. 6,391,188 have not been satisfactory for recovering copper in waste fluids having such high concentrations of copper and azole compounds. Accordingly, there is a need for an improved method for recovering copper from waste fluids.

Summary of the Invention

A method including a) generating ozone; b) contacting a fluid including metal ions and one or more heterocyclic nitrogen compound with the ozone in the presence of a sufficient amount of energy to generate hydroxyl radicals; c) oxidizing the one or more heterocyclic nitrogen compounds with the hydroxyl radicals; and d) electrolytically recovering a metal or metal alloy.

In another embodiment, the method includes a) generating ozone; b) contacting a fluid including metal ions and one or more heterocyclic nitrogen compounds with the ozone in the presence of UV light to generate hydroxyl radicals; c) oxidizing the one or more heterocyclic nitrogen compounds with the hydroxyl radicals; and d) electrolytically recovering a metal or metal alloy.

In a further embodiment, the method includes a) generating ozone; b) contacting a fluid including metal ions and one or more heterocyclic nitrogen compounds in the presence of UV light at a wavelength of 200 nm to 500 nm to generate hydroxyl radicals; c) oxidizing the heterocyclic nitrogen compounds with the hydroxyl radicals; and d) electrolytically recovering a metal or metal alloy.

The methods oxidize heterocyclic nitrogen compounds, which complex with metal ions, such that the metal ions may be recovered by reducing the uncomplexed metal ions to base metal or a metal alloy electrolytically. The electrolytically deposited metal or metal alloy may be readily recovered preventing disposal of metal ions in the environment. The heterocyclic nitrogen compounds are oxidized to carbon dioxide, water and nitrogen in amounts that do not present a hazard to the environment. Residual acidic effluent may be treated in a standard effluent treatment plant without problems arising from either the heterocyclic nitrogen compounds or metal content.

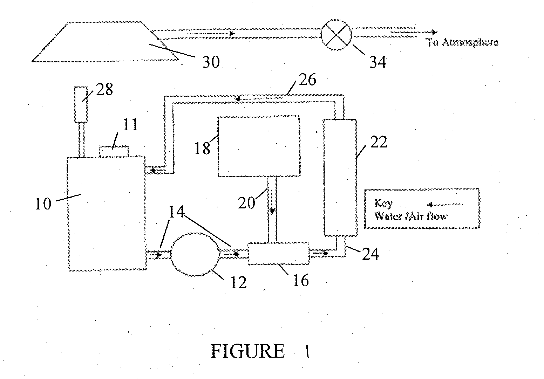

Brief Description of the Drawing

Figure is a schematic diagram of a UV/ozone unit for generating and applying ozone to waste effluent.

Detailed Description of the Invention

As used throughout the specification, the following abbreviations have the following meaning, unless the context clearly indicates otherwise: °C = degrees Centigrade; g = grams; L = liter; mL = milliliter; A = ampere; dm = decimeter; mJ = milliJoules; UV = ultraviolet; cm = centimeter; nm = nanometers; ppm = parts per million; kHz = kiloHertz; W = Watt; "electroplating", "plating" and "depositing" are used interchangeably throughout the specification; "printed wiring board" and "printed circuit board" are used interchangeably throughout the specification; COD = chemical oxygen demand. All percentages are by weight unless otherwise specified. All numerical ranges are inclusive and combinable in any order, except where it is logical that such numerical ranges are construed to add up to 100%.

Methods of the present invention include generating ozone and contacting fluids containing metal ions and one or more heterocyclic nitrogen compounds with a sufficient amount of energy to generate hydroxyl radicals, the hydroxyl radicals oxidize the heterocyclic nitrogen compounds and a metal or metal alloy is recovered electrolytically. Fluids, which are treated by the methods, may be aqueous or partially aqueous. Any fluid or waste effluent containing metal ions and heterocyclic nitrogen compounds may be treated by the methods of the invention to recover a metal or metal alloy. Heterocyclic nitrogen compounds such as azole compounds readily form complexes with metal ions. Such complexes prevent recovery of metals and metal alloys from fluids and are disposed of in landfills, which may lead to contamination of the environment. Further metals, which are not recovered, are wasted. This increases the cost of manufacturing such articles as printed wiring boards. Surprisingly, the methods disclosed herein oxidize heterocyclic nitrogen compounds which complex with metal ions such that the metals may be recovered electrolytically. Oxidation of the heterocyclic nitrogen compounds produces carbon dioxide, water and nitrogen in amounts that do not present an environmental hazard. Metals and metal alloys are recovered and are not disposed of such as to present a hazard to the environment. Additionally, recovery of the metals or metal alloys from the effluent reduces the cost of manufacturing printed wiring boards to the manufacturer and to the customer. Further, the remaining acidic effluent may be treated in standard effluent treatment plants without problems arising from either the complexing agents or the metal content of the effluent. The methods disclosed herein provide a more efficient method of recovering metals than many conventional processes and solves the problem of separating metals from complexing agents for electrolytic recovery of the metals.

Ozone ($O_3$) or triatomic oxygen is bubbled or injected into a fluid, which is to be treated. A sufficient amount of energy or radiation is applied from any suitable source. The ozone absorbs the energy resulting in the formation of oxygen ($O_2$) and an excited oxygen atom (O*). The excited oxygen combines with water to form both hydrogen peroxide and hydroxyl radicals (OH). Hydrogen peroxide subsequently forms hydroxyl radicals. A suitable energy source is UV light. The reaction scheme is as follows:

$$O_3 + UV \rightarrow O_2 + O*$$

$$O* + H_2O \rightarrow 2 \ ^{.}OH$$

$$O* + H_2O \rightarrow H_2O_2$$

$$H_2O_2 + UV \rightarrow 2 \ ^{.}OH$$

Oxidation rates achieved with hydroxyl radicals are greater than those attainable from conventional oxidants such as ozone, hydrogen peroxide and chloride. Reaction rates achieved using hydroxyl radicals may be $10^6$ to $10^9$ times larger than the rates achieved by ozone alone. Ozone generators form ozone at concentration rates of from 1 gram per hour to 50 grams per hour, or such as from 5 grams per hour to 30 grams/hour, or from 10 grams per hour to 20 grams per hour.

Ozone may be generated by any suitable method known in the art. Any suitable commercially available ozone generator and a short wavelength UV exposure unit of 200 nm to 500 nm or such as from 230 nm to 350 nm or such as from 245 nm to 260 nm may be employed. Ozone generators may produce ozone from industrial oxygen (94% to 99%) using the corona principle, which is well known to those skilled in the art. An electrical field is increased until electrical coronas are created. Oxygen molecules split by collision with electrons to form atomic oxygen. The oxygen atoms of the atomic oxygen react with molecular oxygen or other oxygen atoms to form ozone or oxygen molecules. An example of a commercially available ozone generator is a CD-10/AD unit supplied by RGF $O_3$ Systems of West Palm Beach, Florida, U.S.A., which produces ozone by a corona discharge route. Other similar equipment may be equally suitable and are commercially available.

The figure is a schematic of a UV/ozone unit. Waste effluent containing metal ions and one or more heterocyclic nitrogen compounds are placed in holding tank **10** through solution inlet **1**1. Electric pump **12** shunts waste effluent from the holding tank **10** through line **14** to venturi **16**. The waste effluent is mixed with ozone from ozone generator **18**. The ozone is transported to venturi **16** through line **20**. Mixed ozone and waste effluent are transported to UV reactor **22** through line **24**. In UV reactor **22** hydroxyl radicals are generated by UV light, which oxidizes the heterocyclic nitrogen compounds to carbon dioxide, water and nitrogen. Any metal ions, which were in complexes with the heterocyclic nitrogen compounds, are now in their free ion form and may be recovered. Treated waste effluent is then transported from UV reactor **22** back to holding tank **10** through line **26**. Gases such as carbon dioxide and nitrogen are removed from the holding tank by means of off-gas destruct pump **28**, which also destroys excess ozone. The gases are collected by extractor hood **30** and passed through line **32** by the action of motor **34** and passed out to the atmosphere.

Holding tanks may have a volume of at least 1 liter or such as from 1 liter to 100 liters, or such as from 5 to 50 liters. Temperatures in the UV reactor may range from 30° C to 100° C or such as from 40° C to 70° C.

Any suitable UV reactor may be employed to practice the invention provided that it provides a sufficient amount of energy to generate hydroxyl radicals to oxidize at least 80% of the heterocyclic nitrogen compounds or such as from 85% to 98% of the heterocyclic nitrogen compounds. In theory, the hydroxyl radicals generated by the methods disclosed herein may oxidize 100% of the heterocyclic nitrogen compounds. Suitable UV reactors include one or more centrally elongated UV lamps surrounded by a quartz tube or duct.

Suitable UV lamps, which are used in the reactors, generate a sufficient amount of radiation to provide at least 60 $mJ/cm^2$ of energy, or such as from 70 $mJ/cm^2$ to 200 $mJ/cm^2$ of energy, or such as from 90 $mJ/cm^2$ to 125 $mJ/cm^2$ of energy. Such lamps are commercially available. For example, an A4 UV Reactor contains a 254 nm, 110 W UV lamp obtainable from Wedeco UV Systems plc.

Once the fluids have been treated with ozone to oxidize the heterocyclic nitrogen compounds, the fluids containing the metal ions are then transferred to a suitable electrolytic cell for metal or metal alloy recovery. Such fluids may have a pH of from less than 1 to 8, more typically from 2 to 5. Any suitable electrolytic cell may be employed to recover the metal or metal alloy. Typically, electrolytic cells suitable for recovering metals and metal alloys from fluids include a vessel for retaining the fluids and two electrodes electrically connected to a power source. One electrode functions as the cathode and the second electrode functions as the anode. The electrodes may be composed of any suitable material. For example, a suitable cathode may be composed of stainless steel or copper. A suitable electrode may be composed of a precious metal oxide coated with titanium mesh. Typically, anodes are lead dioxide or iridium dioxide with a titanium mesh. Typically, fluids are stirred during metal or metal alloy recovery with an electric stirrer or a rotating electrode.

An example of a suitable electrolytic cell is the Chemelec cell. The chamber of the Chemelec cell, which holds the fluid to be treated, contains mesh electrodes. The mesh electrodes provide a large surface area suitable for the efficient recovery of metals from fluids. Such surface areas may range from 10 $cm^2$ to 40 $cm^2$. The electrodes are situated in a bed of glass beads, which are agitated by the pumping action of the fluid by a suitable pump. Such Chemelec cells are suitable for achieving a final metal ion concentration in the fluid of 3 ppm or less or such as from 0.5 ppm to 0.05 ppm.

DC (direct current) plating, pulse plating (reverse/forward potentials) or combinations thereof may be employed to recover metals and metal alloys from the fluids. Current density may range from 0.5 $A/dm^2$ to 100 $A/dm^2$, or such as from 5 $A/dm^2$ to 50 $A/dm^2$ or such as from 10 $A/dm^2$ to 30 $A/dm^2$. Electroplating is performed at temperatures of from 18° C to 50° C.

Metals may be removed from fluids in accordance with the invention to provide fluids containing less than 10 ppm of metal ions, or such as less than 5 ppm of metal ions, or such as 1 ppm to 0.05 ppm of metal ions or less. Metals recovered by the methods disclosed herein include, but are not limited to copper, nickel, tin, lead, cobalt, gold, silver, platinum, palladium and their alloys. Examples of alloys, which may be recovered, include, but are not limited to, copper/ tin, copper/nickel, copper/bismuth, copper/silver, tin/nickel, tin/lead, nickel/phosphorous, cobalt/phosphorous, and nickel/cobalt/phosphorous. Typically copper, nickel and their alloys are recovered by the methods disclosed herein. More typically copper and its alloys are recovered by the methods disclosed herein. Most typically copper is recovered by the methods.

The methods disclosed herein may recover from 85% or more of the metal ions as metal or metal alloy from waste effluent, or such as from 90% to 98% or more of the metal ions as metal or metal alloy. Typically, the methods described herein may recover as much as 95% to 99% of the metal ions as metal or metal alloy. As much as 100% of the metal ions may be recovered as metal or metal alloy.

Heterocyclic nitrogen compounds include, but are not limited to, azole compounds. Such azole compounds include, but are not limited to, triazoles, tetrazoles, pyrazoles, imidazoles, isoxazoles, oxazoles, isothiazoles, and thiazoles. Such azoles also include substituted azoles, which are substituted with alky, aryl, arakyl, alkylol and alkenyl radicals. Specific examples of azoles and related heterocyclic ring compounds include benzotriazole, tolyltriazole, alkyl or alkoxy substituted benzotriazoles, including n-butyl and hexyloxy substituted benzotriazoles, where substitution occurs on the 4 or 5 position of the benzene ring, 2-mercaptobenzothiazole, 2-mercaptobenzotriazole, 1,2,3-triazole, 4-phenyl-1,2,3-triazole, 1,2-napthotriazole, 4-nitrobenzotriazole, pyrazole, 6-nitroindazole, 4-benzylpyrazole, 4,5-dimethylpyrazole, 3-allypyrazole, imidazole, adenine, guanine, benzimidazole, 5-methyl benzimidazole, 2-phenyl imidazole, 2-benzyl imidazole, 4-allylimidazole, 4-(betahydroxy ethyl)-imidazole, purine, 4-methylimidazole, xanthine, hypoxanthine, 2-methyl imidazole, isoxazole, benzisoxazole, 3-mercaptobenzisoxazole, oxazole, 2-mercapto oxazole, 2-mercaptobenzoxazole, isothiazole, 3-mercaptoisothiazole, 2-mercaptobenzisothiazole, benzisothiazole, thiazole, 2,5-dimercaptothiazole, 2,5-dimercaptobenzotriazole, 5,5'-methylene-bis-benzotriazole, and 4,5,6,7-tetrahydrobenzotriazole. Such compounds are found in waste effluent in amounts of such as 5 g/L to 20 g/L or such as 5 g/L to 15 g/L.

Although the methods disclosed herein may be employed to recover metals and metal alloys from any type of fluid containing heterocyclic nitrogen compounds, such as those described above, the methods typically are used to recover metals and metal alloys from etching solutions used in the manufacture of printed wiring boards. Such etching solutions may be composed of one or more oxidizers, one or more acids, one or more azole compounds, water, and optionally one or more additional components.

Oxidizers employed include, but are not limited to, hydrogen peroxide and permanganate salts. Typically, hydrogen peroxide is used. The amount of oxidizer may range from 6 g/L to 60 g/L or such as from 12 g/L to 30 g/L.

Organic, inorganic acids, or mixtures thereof may be used. Mineral acids typically are used. Examples of such mineral acids include sulfuric acid, nitric acid, phosphoric acid and hydrochloric acid. Mixtures of such acids also may be employed. The amount of acid may vary. For example, acids may range from 5 to 360 g/L or such as from 60 g/L to 110 g/L.

Azole compounds may be employed as corrosion inhibitors in such etchants. Examples of such azoles include triazoles, benzotriazoles, tetrazoles, imidazoles, benzimidazoles or mixtures thereof. Such azoles may be substituted. Such substituents include $(C_1-C_4)$alkyl, amino, $(C_1-C_4)$alkylamino, and $(C_1-C_4)$dialkylamino. Typically, the azole is a $(C_1-C_4)$alkyl substituted or unsubstituted triazole or benzotriazole. Most typically, the azole is benzotriazole. Such azole compounds are included in the etching solutions in amounts of from 1 g/L to 20 g/L or such as from 6 g/L to 12 g/L.

Optional components include, but are not limited to, amines, surfactants, stabilizers for the oxidant, water-soluble polymers, and sources of halide ions. Such components are included in conventional amounts well known to those of skill in the art.

The etchant may be applied to a metal substrate, such as copper or a copper alloy by any conventional means, for example, by immersion in a bath of the etchant or by spraying or any other means of contact. The etchant baths may be run vertically or horizontally. Contact may be as part of a continuous process. Contact time is from 1 second to 10 minutes at temperatures of from 20° C to 75° C.

The etchants may be run continuously at a variety of levels of metal ions in the bath such as from 10 g/L to 20 g/L or greater. Such continuously run baths may be achieved by a bleed and feed process, where an amount of the bath is continuously or periodically removed and corresponding amounts of makeup components are added to compensate for the loss of material during such bleeding or bailout. Bailout, which contains the bath components, is treated as waste effluent and treated according to the methods of metal recovery described herein.

Metals and metal alloys recovered may be further processed by conventional methods known in the art and reused. The remaining waste effluent, which is acidic, may be treated in standard effluent treatment plants without problems arising from either undesirable levels of azoles or metals. Accordingly, the methods of the invention provide for an environmentally friendly method of waste effluent disposal and an efficient method of processing waste effluent.

The following examples help illustrate the invention, but are not intended to limit the scope of the invention.

Example 1

Chemelec Cell and Spent Etchant without Initial UV/Ozone Treatment

The purpose of this experiment was to show that copper could not be recovered from a solution containing benzotriazole.

10 liters of an etchant were made up using the following components:

Table 1

| Component | Amount |
|---|---|
| Benzotriazole | 12 g/L |
| Copper Sulfate Pentahydrate ($Cu^{2+}$) | 38 g/L |
| Hydrogen Peroxide (35%) | 250 mL |
| Sulfuric Acid (96%) | 300 mL |
| Sodium Chloride | 0.5 g/L |
| Thiodiglycolic Acid | 0.005 g/L |
| Polyethylene Glycol | 6 g/L |

A Chemelec cell was-provided which was composed of a 20 liter vessel with 2 anodes composed of titanium mesh coated with ruthenium dioxide and one cathode made of stainless steel. The area of each anode was 0.26 square feet and the area of the cathode was 0.46 square feet. The cathode was placed between the two anodes. The current applied was 6 amperes and the current density for one side of the cathode was 13 $A/dm^2$. The voltage varied from 1.60 to 1.75 volts. A rectifier supplied the electrical power. A 10 ampere DC rectifier was the power supply.

The spent etchant was put into the Chemelec cell. The etchant was allowed to circulate for 10 minutes after which analysis of the etchant was carried out. An electric pump kept the etchant circulating. Analysis for the etchant strength was carried out every hour by a standard method of titration of the active components with silver nitrate at a concentration of 0.02 moles/L. Copper concentration was measured using a titrimetric method by titrating 10 mL aliquots of etchant with 0.05 M EDTA (ethylenediamine tetraacetic acid) solution.

The temperature also was taken to determine the heat gained from the pump. The experiment was carried out at room temperature (20° C to 22° C), thus any heat gained by the etchant was heat from the pump.

The results of the experiment are disclosed in the table below:

Table 2

| Time (Hours) | Temperature (°C) | Voltage (volts) | Bath Strength (%) | Copper Levels (g/L) |
|---|---|---|---|---|
| 0 | 21 | 1.6 | 113.93 | 37.3 |
| 1 | 25 | 1.7 | 115.95 | 37.3 |
| 2 | 27 | 1.7 | 114.05 | 37.3 |
| 3 | 29 | 1.7 | 115.19 | 37.3 |
| 4 | 30 | 1.7 | 113.41 | 37.3 |
| 5 | 31 | 1.75 | 113.41 | 36.5 |

Table 2   (continued)

| Time (Hours) | Temperature (°C) | Voltage (volts) | Bath Strength (%) | Copper Levels (g/L) |
|---|---|---|---|---|
| 6 | 32 | 1.75 | 113.92 | 37.3 |

During the experiment the etchant strength and the copper levels (as $Cu^{2+}$) remained almost constant. Slight fluctuations were due to experimental error. The results of this experiment showed that copper could not be recovered from the etchant. This was believed to be due to copper complexing with benzotriazole.

Example 2

Treatment of Spent Etchant with UV and Ozone

15 liters of an etchant having the formulation of Example 1 were placed in a holding tank of a UV/ozone unit. The UV lamp was an A4 model 254 nm, 110 W lamp. The ozone generator was an OT-005 generator obtained from Ozone Technology AB. The holding tank had a volume of 40 liters. The etchant was pumped from the holding tank by an electric pump through a conduit to a venturi where the etchant was mixed with ozone generated from an ozone generator. The ozone was introduced into the venturi at a rate of 5 gm/hour. The oxygen supplied to the ozone generator was commercial industrial oxygen (94% to 99%). The ozone was generated by corona discharge with a corona frequency on the electrode of the generator of 20 to 30 kHz. The etchant was treated for one hour with the ozone before the UV light was turned on in the UV reactor.

The UV reactor contained a centrally located UV lamp surrounded by a quartz duct with total internal reflectivity. The UV lamp generated 100 mJ/$cm^2$ of energy.

During treatment the etchant strength was analyzed every hour along with a copper analysis. The temperature also was monitored. Other than the heat generated by the pump, there was no other form of heat introduced into the etchant. The COD was determined at the beginning, middle and end of the experiment. The COD was determined using a standard COD measurement kit obtained from HACH, Inc.

The treatment was carried out for 16 hours after which the treatment was stopped because a copper precipitate was starting to form. The initial COD level was at 18400 ppm. The initial copper level was 36.9 g/L. The pH of the etchant was less than 0. The results of the experiment are disclosed in the tables below.

Table 3

| Time (Hours) | Temperature (°C) | Bath Strength (%) | Copper Levels (g/L) |
|---|---|---|---|
| 0 | 21 | 113.03 | 36.9 |
| 1 | 32 | 103.66 | 36.9 |
| 2 | 40 | 95.67 | 37.1 |
| 3 | 42 | 86.04 | 36.9 |
| 4 | 44 | 76.92 | 36.9 |
| 5 | 44 | 67.03 | 36.9 |
| 6 | 44 | 60.83 | 36.9 |
| 7 | 22 | 49.93 | 36.9 |
| 8 | 26 | 43.72 | 36.9 |
| 9 | 36 | 37.64 | 36.9 |
| 10 | 40 | 32.44 | 36.9 |
| 11 | 42 | 27.62 | 36.9 |
| 12 | 42 | 20.91 | 36.9 |
| 13 | 44 | 20.78 | 36.9 |
| 14 | 28 | 16.22 | 36.9 |
| 15 | 34 | 15.65 | 36.9 |

Table 3   (continued)

| Time (Hours) | Temperature (°C) | Bath Strength (%) | Copper Levels (g/L) |
|---|---|---|---|
| 16 | 38 | 15.65 | 36.9 |

After 16 hours the etchant strength had decreased down to 15.65% from an initial 113.03%. A decrease of almost 100% in bath strength was achieved. Therefore the majority of the benzotriazole had been oxidized using the UV/ozone method.

Table 4

| Time (Hours) | Chemical Oxygen Demand (ppm) |
|---|---|
| 0 | 18400 |
| 13 | 8175 |
| 16 | 7525 |

In addition to the decrease in the bath strength, there was also a large decrease in the level of COD, which further supported that the majority of benzotriazole was oxidized.

Example 3

Chemelec cell and Treated Spent Etchant

12 liters of the treated spent etchant from Example 2 were placed into the Chemelec cell. 2 anodes were used, which were made of titanium mesh coated with ruthenium dioxide and had an area of 0.26 square feet. A cathode of stainless steel with an area of 0.46 square feet was placed between the two anodes. The current applied was 10 amperes and the current density for one side of the cathode was 22 A/dm$^2$.

Prior to placing the electrodes in the cell with the spent etchant, the etchant was allowed to circulate for 10 minutes. An electric pump was used to circulate the etchant. After the etchant was initially stirred, the electrodes were placed into the cell and were connected to a rectifier and the current was turned on. The current was slowly increased by 1 ampere per half-hour until a maximum current of 10 amperes was reached. An analysis of the amount of copper present was carried out every 30 minutes and then every hour to determine the amount of copper, which had been recovered. The concentration of copper was determined by titrating 10 mL aliquots of etchant with 0.05 M EDTA solution. The analysis was performed over 58.5 hours. The results are disclosed in the table below.

Table 5

| Time (Hours) | Copper Levels (g/L) |
|---|---|
| 0 | 36.5 |
| 0.5 | 35.9 |
| 1 | 35.58 |
| 1.5 | 33.84 |
| 2.5 | 32.72 |
| 3.5 | 30.82 |
| 4.5 | 29.55 |
| 5.5 | 29.15 |
| 6.5 | 28.28 |
| 7.5 | 27.00 |
| 8.5 | 26.37 |
| 9.5 | 26.05 |
| 10.5 | 25.42 |

Table 5   (continued)

| Time (Hours) | Copper Levels (g/L) |
| --- | --- |
| 11.5 | 24.78 |
| 12.5 | 24.15 |
| 13.5 | 24.15 |
| 14.5 | 23.51 |
| 15.5 | 23.19 |
| 16.5 | 23.19 |
| 17.5 | 22.87 |
| 18.5 | 22.24 |
| 19.5 | 21.92 |
| 20.5 | 21.60 |
| 21.5 | 21.29 |
| 22.5 | 20.65 |
| 23.5 | 20.02 |
| 24.5 | 19.70 |
| 25.5 | 19.38 |
| 26.5 | 18.43 |
| 27.5 | 17.47 |
| 28.5 | 17.47 |
| 29.5 | 17.16 |
| 30.5 | 16.20 |
| 31.5 | 14.93 |
| 32.5 | 12.79 |
| 33.5 | 11.91 |
| 34.5 | 9.53 |
| 35.5 | 8.74 |
| 36.5 | 8.58 |
| 37.5 | 7.94 |
| 38.5 | 7.31 |
| 39.5 | 6.75 |
| 40.5 | 6.35 |
| 41.5 | 5.56 |
| 42.5 | 4.77 |
| 43.5 | 4.13 |
| 44.5 | 3.71 |
| 45.5 | 3.49 |
| 46.5 | 3.39 |
| 47.5 | 3.28 |
| 48.5 | 3.18 |

Table 5  (continued)

| Time (Hours) | Copper Levels (g/L) |
|---|---|
| 49.5 | 3.07 |
| 50.5 | 2.86 |
| 51.5 | 2.75 |
| 52.5 | 2.54 |
| 53.5 | 2.48 |
| 54.5 | 2.54 |
| 55.5 | 2.65 |
| 56.5 | 2.54 |
| 57.5 | 2.54 |
| 58.5 | 2.54 |

The majority of the copper was recovered from the spent etchant. The copper concentration of the etchant went from an initial 36.5 g/L to a low of 2.54 g/L. Only 7% of the copper remained in the etchant after 58.5 hours of electroplating. Thus, the initial treatment of the etchant with UV/ozone oxidized the benzotriazole such that most of the copper was recovered from the etchant.

Example 4

UV/Ozone Treated Spent Etchant and Electrochemical Recovery of Copper

500 mL of a spent etchant having the formulation as shown in Example 1 were treated with UV/ozone. The apparatus for the UV/ozone treatment was the same as used in Example 2. Ozone was generated in an ozone generator from commercial industrial oxygen. The ozone was mixed with the spent etchant in a venturi and then shunted to the UV reactor having a quartz duct with total internal reflectivity and a centrally located UV lamp. Prior to turning on the UV light, the etchant was treated with the ozone for one hour. The UV light was then turned on and the etchant was treated for 36.5 hours. Bath strength was measured every half-hour for 5.5 hours then every hour for another 12 hours. The results are disclosed in Table 6 below. The COD was measured at time intervals as designated in Table 7 below.

Table 6

| Time (Hours) | Bath Strength (%) |
|---|---|
| 0 | 116.33 |
| 0.5 | 110.50 |
| 1 | 109.99 |
| 1.5 | 104.16 |
| 2 | 99.60 |
| 2.5 | 92.51 |
| 3 | 82.11 |
| 3.5 | 77.81 |
| 4 | 69.44 |
| 4.5 | 61.84 |
| 5 | 54.74 |
| 5.5 | 48.47 |
| 6.5 | 36.0 |

Table 6   (continued)

| Time (Hours) | Bath Strength (%) |
|---|---|
| 7.5 | 28.13 |
| 8.5 | 19.01 |
| 9.5 | 11.91 |
| 10.5 | 7.35 |
| 11.5 | 4.82 |
| 12.5 | 4.31 |
| 13.5 | 3.93 |
| 14.5 | 2.66 |
| 15.5 | 2.03 |
| 16.5 | 2.03 |
| 17.5 | 2.03 |

The bath strength went from 116.33% at time 0 to a low of 2.03% after 17.5 hours of ozone treatment. The result showed that a majority of the benzotriazole was oxidized. In addition to bath strength analysis, the COD of the etchant also was monitored at the time intervals disclosed in Table 7 below.

| Time (hours) | Chemical Oxygen Demand (ppm) |
|---|---|
| 0 | 4070 |
| 14.5 | 1235 |
| 18.5 | 983 |
| 21.5 | 880 |
| 25.5 | 790 |
| 33.5 | 660 |
| 36.5 | 635 |

The COD decline supported the results of the bath strength measurements that a majority of the benzotriazole was oxidized.

After the ozone treatment the etchant was placed into a beaker of an electrochemical cell for recovering copper. The anode was a lead electrode. The cathode was a titanium base with an iridium dioxide coating. The area of the electrode was 0.047 square feet. The etchant was stirred throughout electrolysis. The current applied was 5 amperes with a current density at the cathode of 106 $A/dm^2$.

The initial copper concentration ($Cu^{2+}$) was measured to be 36.22 g/L. Copper concentration was measured by titrating 10 mL aliquots with 0.05 MEDTA. After 14.5 hours of electroplating the copper concentration was determined to be 9.53 g/L. After 19 hours the copper level in the etchant was determined to be 0 g/L. All of the copper had been recovered.

The experiment showed that the spent etchant first treated with UV/ozone followed by electroplating enables total 100% copper metal recovery from a spent etchant.

## Claims

1.   A method comprising:

a) generating ozone;

b) contacting a fluid comprising metal ions and one or more heterocyclic nitrogen compounds with the ozone in the presence of a sufficient amount of energy to generate hydroxyl radicals;

c) oxidizing the one or more heterocyclic nitrogen compounds with the hydroxyl radicals; and

d) electrolytically recovering a metal or a metal alloy.

2. The method of claim 1, wherein the amount of energy to generate the hydroxyl radicals is at least 60 mJ/cm$^2$.

3. The method of claim 2, wherein the amount of energy to generate the hydroxyl radicals is from 70 mJ/cm$^2$ to 200 mJ/cm$^2$.

4. The method of claim 1, wherein a source of energy to generate the hydroxyl radicals is UV light.

5. The method of claim 1, wherein 85% or more of the metal ions are recovered as the metal or the metal alloy.

6. A method comprising:

a) generating ozone;

b) contacting a fluid comprising metal ions and one or more heterocyclic nitrogen compounds with the ozone in the presence of UV light to generate hydroxyl radicals;

c) oxidizing the one or more heterocyclic nitrogen compounds with the hydroxyl radicals; and

d) electrolytically recovering a metal or metal alloy.

7. The method of claim 6, wherein the ozone is generated at a rate of from 1 g/hour to 50 g/hour.

8. The method of claim 6, wherein at least 80% of the one or more heterocyclic nitrogen compounds is oxidized.

9. The method of claim 6, wherein from 90% to 98% of the metal ions are recovered as the metal or the metal alloy.

10. The method of claim 6, wherein the UV light generates from 90 mJ/cm$^2$ to 125 mJ/cm$^2$.

FIGURE 1

EP 1 502 963 A1

### European Patent Office

## EUROPEAN SEARCH REPORT

Application Number

EP 04 25 4464

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DATABASE WPI<br>Section Ch, Week 198004<br>Derwent Publications Ltd., London, GB;<br>Class M13, AN 1980-06388C<br>XP002307063<br>& JP 54 156345 A (HITACHI PLANT ENG & CONSTR CO) 10 December 1979 (1979-12-10)<br>* abstract * | 1,5,6,9 | C22B3/20<br>C22B15/00<br>C02F1/461<br>C02F1/62<br>C02F1/78<br>C25C1/12<br>C02F9/00 |
| Y | PATENT ABSTRACTS OF JAPAN<br>vol. 0121, no. 43 (C-492),<br>30 April 1988 (1988-04-30)<br>& JP 62 260090 A (MITSUBISHI METAL CORP),<br>12 November 1987 (1987-11-12)<br>* abstract * | 1,5,6,9 | |
| Y | PATENT ABSTRACTS OF JAPAN<br>vol. 2002, no. 06,<br>4 June 2002 (2002-06-04)<br>& JP 2002 035773 A (HITACHI PLANT ENG & CONSTR CO LTD),<br>5 February 2002 (2002-02-05)<br>* abstract * | 1,5,6,9 | |
| Y,D | US 6 391 188 B1 (GOOSEY MARTIN T)<br>21 May 2002 (2002-05-21)<br>* abstract; claims 5-10 * | 1,5,6,9 | |
| Y | US 4 289 594 A (SHARKNESS JAMES E ET AL)<br>15 September 1981 (1981-09-15)<br>* column 5, line 34 - column 6, line 44; example I * | 1,6-8 | |
| Y | US 4 512 900 A (SHARKNESS JAMES E ET AL)<br>23 April 1985 (1985-04-23)<br>* column 3, line 14 - line 27; example 1 * | 1,6-8 | |

TECHNICAL FIELDS SEARCHED (Int.Cl.7)

C22B
C02F
C25C

-/--

The present search report has been drawn up for all claims

| Place of search | Date of completion of the search | Examiner |
|---|---|---|
| The Hague | 23 November 2004 | Bombeke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**European Patent Office**

## EUROPEAN SEARCH REPORT

Application Number

EP 04 25 4464

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 3 783 113 A (ISAACSON C ET AL) 1 January 1974 (1974-01-01) * column 4, line 47 - line 75; claims 1-3; figure 1; example 1 * | 1,5,6,9 | |
| A | DATABASE WPI Section Ch, Week 200273 Derwent Publications Ltd., London, GB; Class D15, AN 2002-679339 XP002307127 & KR 2002 033 706 A (GP & E) 7 May 2002 (2002-05-07) * abstract * | 1,6 | |
| | | | **TECHNICAL FIELDS SEARCHED (Int.Cl.7)** |

The present search report has been drawn up for all claims

| Place of search | Date of completion of the search | Examiner |
|---|---|---|
| The Hague | 23 November 2004 | Bombeke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 25 4464

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2004

| Patent document cited in search report | | Publication date | Patent family member(s) | | Publication date |
|---|---|---|---|---|---|
| JP 54156345 | A | 10-12-1979 | JP | 1096678 C | 14-05-1982 |
| | | | JP | 56042999 B | 08-10-1981 |
| JP 62260090 | A | 12-11-1987 | JP | 2009683 C | 02-02-1996 |
| | | | JP | 7035595 B | 19-04-1995 |
| JP 2002035773 | A | 05-02-2002 | NONE | | |
| US 6391188 | B1 | 21-05-2002 | CN | 1278564 A | 03-01-2001 |
| | | | EP | 1043408 A2 | 11-10-2000 |
| | | | JP | 2000317458 A | 21-11-2000 |
| | | | TW | 495379 B | 21-07-2002 |
| US 4289594 | A | 15-09-1981 | DE | 3160591 D1 | 18-08-1983 |
| | | | EP | 0039819 A1 | 18-11-1981 |
| | | | JP | 1271591 C | 25-06-1985 |
| | | | JP | 57004290 A | 09-01-1982 |
| | | | JP | 59048155 B | 24-11-1984 |
| US 4512900 | A | 23-04-1985 | DE | 3482318 D1 | 28-06-1990 |
| | | | EP | 0144952 A2 | 19-06-1985 |
| | | | JP | 60129187 A | 10-07-1985 |
| US 3783113 | A | 01-01-1974 | BE | 789944 A1 | 01-02-1973 |
| | | | CA | 1021713 A1 | 29-11-1977 |
| | | | DE | 2250072 A1 | 19-04-1973 |
| | | | FR | 2156249 A1 | 25-05-1973 |
| | | | GB | 1390268 A | 09-04-1975 |
| | | | IT | 968493 B | 20-03-1974 |
| | | | JP | 48072026 A | 28-09-1973 |
| | | | NL | 7213827 A | 16-04-1973 |
| KR 2002033706 | A | 07-05-2002 | NONE | | |

EPO FORM P0459